# EUROPEAN PATENT SPECIFICATION

(11) **EP 0 639 447 B1**
(45) Date of publication and mention of the grant of the patent: **25.03.1998**
(21) Application number: 94305083.1
(22) Date of filing: 12.07.1994
(51) Int. Cl.: B29D 30/24

(54) **A tyre former capable of expanding and contracting in an axial direction**
Axial ausschiebbare und einziehbare Reifenaufbautrommel
Tambour de confection de pneus, pouvant se dilater et se contracter en direction axiale

(30) Priority: 14.07.1993 JP 174402/93
(43) Date of publication of application: 22.02.1995
(73) Proprietor: Sumitomo Rubber Industries Limited, Kobe-shi, Hyogo-ken (JP)
(72) Inventor: Miyanaga, Yoshinobu, Shirakawa-shi, Fukushima-ken (JP); Mishima, Kenji, Fukushima-ken (JP)
(74) Representative: Stewart, Charles Geoffrey

(56) References cited:
- EP-A- 0 432 993
- DE-A- 2 705 504
- DE-B- 1 218 146
- US-A- 2 039 531
- US-A- 3 784 437
- US-A- 4 220 494
- US-A- 4 402 783

## Description

This invention relates to a tyre former for use in a tyre building apparatus.

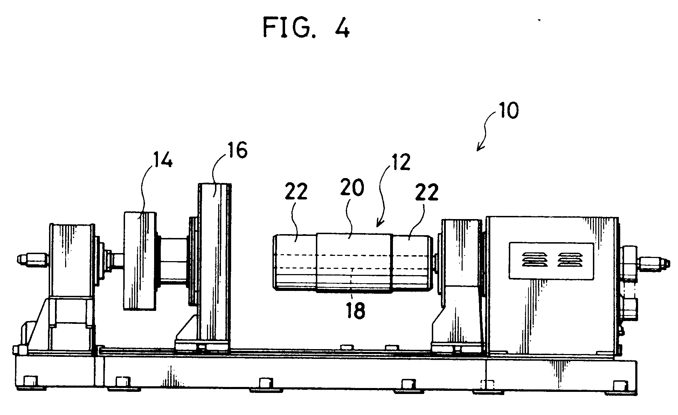

There has been known a tyre building apparatus as shown in Fig. 4. In Fig. 4, a tyre building apparatus 10 is provided with a tyre former 12, a tread ring forming drum 14, and a transfer device 16 for transferring a tread ring to the tyre former 12 from the tread ring forming drum 14. Specifically, cylindrical carcass plies are assembled onto the tyre former 12 and bead cores of wire are put on each side of the carcass plies on the tyre former 12. On the other hand, a tread ring is formed on the drum 14, and then transferred to the tyre former 12 by the transfer device 16. When the tread ring is positioned around the carcass plies on the tyre former 12, the tyre former 12 is axially expanded to deform the carcass plies into a toroidal shape. The outer surface of the toroidal carcass plies adheres to the inner surface of the tread ring. In this way, a green tyre is formed.

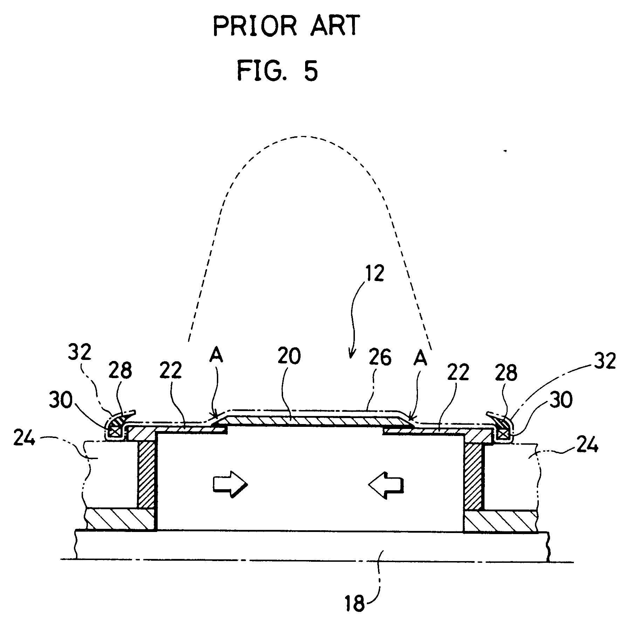

As shown in Fig. 5, the tyre former 12 conventionally comprises a centre ring 20 and a pair of side rings 22 which are provided at opposite sides of the centre ring 20. The side rings 22 are mounted on a drum shaft 18 and movable closer to and away from each other in the axial direction of the drum shaft 18.

The outer diameter of each side ring 22 is set such that the outer circumferential surface of the side ring 22 comes slidably in contact with the inner circumferential surface of the centre ring 20. When the side rings 22 move closer to each other from the positions shown in Fig. 5, i.e., in directions of the arrow in Fig. 5, they are consequently located inside the centre ring 20. In this way, the tyre former 12 may change from the wide drum stage shown in Fig. 5 to a narrow drum stage in which the side rings 22 are located inside the centre ring 20.

More specifically, a green tyre is built with the above tyre building apparatus as follows. First, after the carcass plies 26 are wrapped around the outer circumferential surface of the tyre former 12 set in its wide drum stage. Bead cores 30 including a bead apex 28 are placed at opposite outer ends of the carcass plies 26. Subsequently, an unillustrated bladder of a bead locking device 24 provided at the outer end of each side ring 22 is inflated, and opposite ends 32 of the carcass plies 26 are, as shown in Fig. 5, turned up to cover the bead wires 30. Thereafter, the side rings 22 are moved closer to each other to change the tyre former 12 into the narrow drum stage, and air is supplied between the centre ring 20 and the tyre carcass, with the result that the tyre carcass is expanded radially and deformed into a toroidal shape as indicated by the dotted line in Fig. 5.

In such a conventional tyre former 12, however, there are stepped portions A between the centre ring 20 and the two side rings 22 in the initial state of the tyre former 12, i.e., in the wide drum stage, as shown in Fig. 5. This is because the outer diameters of the side rings 22 and the centre ring 20 differ. As a result, the cylindrical carcass plies 26 are formed with annular stepped portions corresponding to the stepped portions A. This makes it difficult to form the carcass plies 26 into a uniform cylinder, which greatly influences the quality of the tyre product. Further, the carcass plies 26 are normally made by adhering two or more layers of different kinds of materials one on another. Again, as a result the final tyre product may be defective because air remains between the two layers due to the presence of the stepped portion A. Accordingly, it is necessary to remove the air remaining in the carcass plies 26 in the tyre building process.

It will be seen that if the layers of different materials are adhered in an endless manner to form carcass plies without any accompanying stepped portions in the tyre forming step, then air does not remain between these materials. This will eliminate the air removing operation which has to be conducted in the conventional apparatus, thus increase the working efficiency.

Also, the centre ring 20 of the conventional tyre former is made of a single ring-shaped member as are the side rings 22. Accordingly, when the centre ring 20 is replaced to change the width of the tyre former for building a different size of tyre, it has been necessary to remove not only the centre ring 20 but also one of the side rings 22 and the bead locking device coupled therewith from the drum shaft. Such a replacement operation requires an exceedingly large amount of labour and time.

A tyre building apparatus including a former comprising movable side ring having outer circumferential surfaces flush with that of a centre ring in accordance with the preamble of claim 1 is known, for example from EP-A-0432993. However in this known former the relative axial positioning of the centre ring utilises coil springs undergoing considerable extension and contraction, which is liable to give rise to reliability problems due to spring failure.

It is an object of the present invention to provide a tyre former for use in a tyre building apparatus which has overcome the above-mentioned problems.

It is another object of the present invention to provide a tyre former which can provide a wide drum stage in which side rings are located in respective axially expanded positions and outer circumferential surfaces of the side rings are flush with that of a centre ring, and a narrow drum stage in which the side rings are located inside the centre ring.

It is another object of the present invention to provide a tyre former which enables easy replacement of a centre ring to change the width of tyre former.

Accordingly, the present invention is directed to a tyre former for use in a tyre building apparatus, the tyre former comprising a shaft, a radially expandable centre ring provided coaxially around the shaft, including a plurality of centre plates separable from one another in the circumferential direction of the centre ring and movable in the radial direction and biasing means for biasing the plurality of centre plates inwardly of the centre ring, a pair of side rings mounted coaxially on the shaft, the side rings being movable closer to and away from each other along the shaft to selectively provide an axially expanded state where the side rings are positioned on opposite sides of the centre ring and art outer circumferential surface of the centre ring is flush with an outer circumferential surface of the centre ring and an axially contracted state where the side rings are positioned radially inside the centre ring, a pair of sliders slidably mounted on the shaft for supporting the pair of side rings respectively, characterised in that guide means is provided for each centre plate between the between the pair of sliders for guiding the axial movement of the pair of slide rings, the guide means includes a stationary rod extending in parallel with the shaft and having a first block and a second block on opposite ends thereof, a first rod attached on one slider and extending in parallel with the shaft and passing through the first block for slidably supporting the first block, and a second rod attached on the other slider and extending in parallel with the shaft and passing through the second block for slidably supporting the second block.

Each centre plate is preferably formed with slanting surfaces on opposite side ends thereof, the slanting surface being formed in such a way that the wall thickness of the centre plate becomes smaller at a more axially outward position; the side rings being each formed with a slanting surface on an inward side end thereof, the slanting surface being formed in such a way as to meet the slanting end surface of the centre plate in the axially expanded state; whereby the side rings are axially movable toward the inside of the centre ring along the respective slanting end surfaces.

The side ring may be further formed with a supporting portion on a more inward end than the slanting end surface for supporting the centre plates in the axially expanded state.

Further, the side ring may be provided with a bead locking device on an axially outward end thereof.

Further, a stationary member fixedly attached one of the first and second blocks may be utilised and connector means provided between the stationary member and the ring segment for connecting the ring segment with the stationary member.

The first and second blocks may be removable from the first and second rods respectively.

Moreover, the connector means may be constructed by a projection provided on a free end of the stationary member; a block fixedly attached on an inner surface of the ring segment, the block being formed with a hole engageable with the projection; and a spring provided between the stationary member and the block for urging the ring segment in the radially inwards direction.

The block attached on the ring segment may be removable from the stationary member.

In the tyre former thus constructed, the outer circumferential surface of the centre ring is flush with those of the side rings when the tyre former is in its wide drum stage, i.e., in the axially expanded state where the centre ring is held between the two side rings. Accordingly, no stepped portion is formed on the outer circumferential surface of the tyre former, and layers of material used to form a carcass can be adhered sealably one over another, eliminating the undesirable likelihood that air remains between the layers of materials.

When the side rings are moved closer to each other, the centre ring is pressed from the axially outer ends by these side rings. This pressing force causes the ring segments constituting the centre ring to move radially outwards along the radially inward slanting faces formed at the axially inner ends of the side rings, and the centre ring is brought into its radially expanded state. When the side rings are further moved, the side rings are located inside the centre ring having radially expanded and the tyre former is brought into a narrow drum stage, i.e., the axially contracted state.

When the side rings are moved away from each other after the tyre is formed, the ring segments of the centre ring are moved radially inwards by the biasing forces from the biasing members. Thus, the centre ring is returned into its radially contracted state and the tyre former is returned to the axially expanded state.

These and other objects, features and advantages of the present invention will become more apparent upon a reading of the following detailed description and accompanying drawings in which:
Fig. 1 is a schematic diagram in section showing an inventive tyre former for use in a tyre building apparatus in an axially expanded state;
Fig. 2 is a schematic diagram in section showing the tyre former in an axially contracted state;
Fig. 3 is a sectional view taken along the line III - III in Fig. 1;
Fig. 4 is a front elevation view showing an overall construction of a tyre building apparatus provided with a conventional tyre former; and
Fig. 5 is a sectional view showing the conventional tyre former.

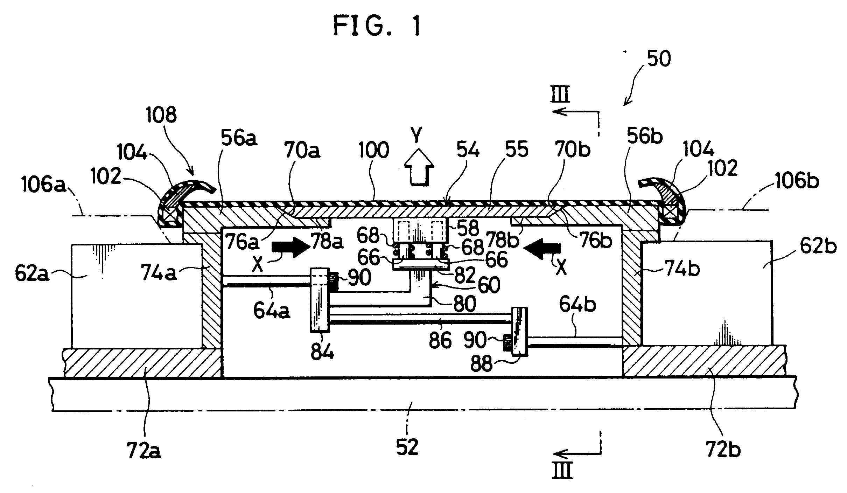

A tyre former of the invention will be described with reference to Figs. 1 to 3. It should be noted that the tyre building apparatus is basically identical to the tyre building apparatus shown in Fig. 4 except for the tyre former.

As shown in Fig. 1, a tyre former 50 of the invention is provided with a drum shaft 52, a centre ring 54 mounted on the drum shaft 52, and a pair of side rings 56a and 56b mounted on the drum shaft 52 at opposite sides of the centre ring 54 with respect to the axial direction of the drum shaft 52 (hereinafter, referred to merely as "axial direction").

The side rings 56a, 56b are each a drum member having the same outer diameter as the centre ring 54. An inner end portion of each side ring has a stepped and tapered structure. More specifically, as shown in Fig. 1, the inner end portions of the side rings 56a, 56b are formed with slanting faces 76a, 76b which slope towards the shaft centre and cylindrical portions 78a, 78b which extend inwards parallel to the drum shaft 52 from the slanting faces 76a, 76b and having an outer diameter smaller than the outer flat surfaces of the side rings 56a, 56b, respectively.

The side rings 56a, 56b are mounted on the drum shaft 52 by flanges 74a, 74b and sleeves 72a, 72b respectively, and are driven by an unillustrated drive device along the drum shaft 52 closer to and away from each other. At the outer ends of the side rings 56a and 56b are provided bead locking devices 62a and 62b, although not shown in detail.

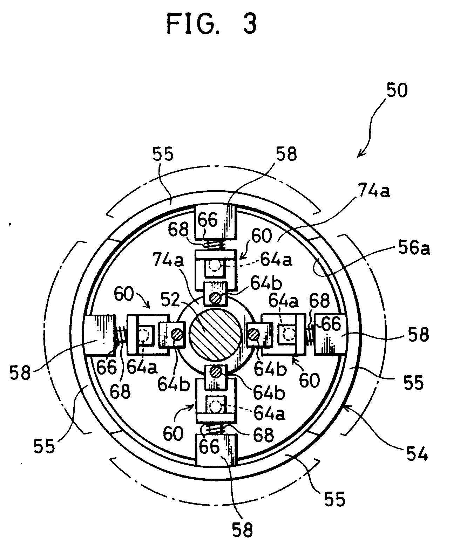

Inside the side ring 56a, there are provided a plurality of slide rods 64a (four slide rods in this embodiment) extending parallel to the drum shaft 52 and circumferentially spaced apart at specified intervals as shown in Figs. 1 and 3. The slide rods 64a are fixedly attached to the flange 74a.

Inside the side ring 56b as well, the same number of slide rods 64b extend parallel to the drum shaft 52 and these are fixedly attached to the flange 74b. The slide rods 64b are opposed to the corresponding slide rods 64a and located closer to the shaft centre than them.

The corresponding slide rods 64a and 64b which are opposed to each other, are coupled by a coupling member 60. Each coupling member 60 is, as shown in Fig. 1, an L-shaped stationary member 80 including a supporting portion 82 facing the inner circumferential surface of the centre ring 55 and a block 84 facing the flange 74a. On the block 84 is secured a stationary rod 86 extending towards the flange 74b in parallel with the drum shaft 52. At the leading end of the stationary rod 86 is provided a block 88. Further, the supporting portion 82 are formed with a pair of rods 66 projecting in the radial direction. These rods 66 serve as a support for the centre ring 55 to be described in detail later.

In each coupling member 60, the slide rod 64a extends through an unillustrated opening formed in the block 84 and the slide rod 64b extends through an unillustrated opening formed in the block 88. Thus, the coupling member 60 is slidable along the slide rods 64a and 64b in the axial direction of the drum shaft 52. At the inner end of each of the slide rods 64a and 64b is mounted a stopper 90 for keeping the slide rod 64a (64b) from moving away from the coupling member 60.

As shown in Fig. 3, the centre ring 54 is a drum member formed of a plurality of separate centre plates 55 (four plates in this embodiment) which are circumferentially arranged. This centre ring 54 has a thickness smaller than the respective side rings 56a, 56b, and is formed, at outer ends of the inner circumferential surface, with slanting faces 70a, 70b which slope radially outward in the corresponding axially outward directions.

As shown in Fig. 1, the centre ring 54 is held between the side rings 56a, 56b in the expanded state of the tyre former 50. In this state, the opposite outer end portions of the centre ring 54 are externally fitted on the cylindrical portions 78a, 78b of the side rings 56a, 56b and the slanting faces 70a, 70b are engaged with the slanting faces 76a, 76b on the inner ends of the side rings 56a, 56b. Further, the outer circumferential surface of the centre ring 54 is then flush with those of the side rings 56a and 56b.

A block 58 is provided on the inner circumferential surface of each centre plate 55 of the centre ring 54. In each block 58 is formed a pair of guide holes which are open in the radial direction and juxtaposed in the axial direction. In these guide holes are slidably inserted the corresponding rods 66 projecting from the supporting portion 82 of each coupling member 60. The corresponding block 58 and supporting portion 82 are coupled by way of a contraction spring 68, with the result that the corresponding centre plate 55 and coupling member 60 are connected with each other and each centre plate 55 is biased toward the centre of the drum shaft 52.

There will be next described the operation of the tyre former 50 constructed as described above.

When the tyre forming operation is started, the tyre former 50, and the side rings 56a and 56b are in their reference positions, i.e., in the state where the centre ring 54 is held between the side rings 56a and 56b and the outer circumferential surface thereof is flush with those of the side rings 56a and 56b as shown in Fig. 1.

Upon the start of the tyre building operation, carcass plies 100 are placed on the outer circumferential surface of the tyre former 50 and formed into a cylindrical shape. Since the outer circumferential surfaces of the centre ring 54 and the side rings 56a, 56b are flush with each other, the cylindrically formed carcass ply layers 100 have no stepped portion.

Thereafter, bead cores 102 each having a bead apex 104 are positioned at the outer ends of the carcass plies 100 and the unillustrated bladders of the bead locking devices 62a, 62b are inflated. As a result, the opposite ends of the carcass plies 100 are turned up at the bead wires 102 as shown in Fig. 1, thereby forming a tyre carcass 108.

Upon the formation of the tyre carcass 108, locking members 106a and 106b of the bead locking devices 62a and 62b are driven to move radially outwards to tightly hold the opposite ends of the tyre carcass 108, i.e., the bead portions thereof, and the side rings 56a, 56b of the tyre former 50 are moved closer to each other in the directions represented by the arrows X in Fig. 1. In synchronism with the movement of the side rings 56a, 56b, air is supplied to the inner circumferential surface of the tyre carcass 108.

At this time, the side rings 56a, 56b, move closer to each other to press the axially outer ends of the centre plates 55 of the centre ring 54. This pressing forces causes the centre plates 55 to move radially outwards, that is, in the direction represented by the white arrow Y in Fig. 1, along the ends of the side rings 56a, i.e., the slanting faces 76a and 76b thereof. When the inner ends of the side rings 56a, 56b finally come into contact with the blocks 58 of the respective centre plates 54, the centre plates 54 are completely located on the outer circumferential surfaces of the side rings 56a, 56b. In other words, the side rings 56a, 56b are located inside the centre ring 54.

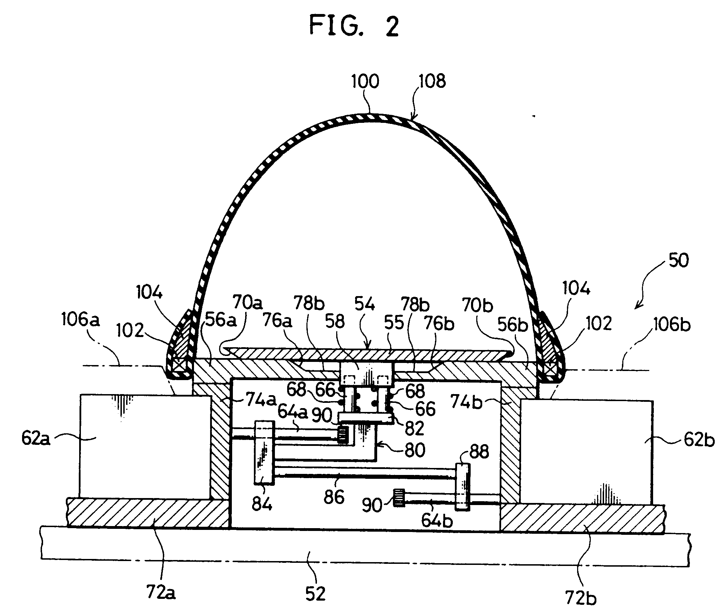

When the side rings 56a, 56b are located at their axially innermost positions inside the centre ring 54, the tyre carcass 108 is completely expanded and deformed into a toroidal shape as shown in Fig. 2. Then a tread ring is transferred and adhered to the outer circumferential surface of the tyre carcass 108, thereby forming a green tyre. The green tyre thus formed is subsequently removed from the tyre former 50 and transferred to the next manufacturing process.

The side rings 56a, 56b are moved away from each other in the tyre former 50 from which the green tyre is removed. Since the centre plates 55 are biased toward the shaft centre by the biasing forces from the contraction springs 68, they move radially inwards along the slanting faces 76a, 76b as the side rings 56a, 56b move axially outwards. Consequently, the centre ring 54 is returned to its original radially contracted state from the radially expanded state and the tyre former 50 is reset to the initial state shown in Fig. 1.

As described above, in the tyre former 50 according to the invention, the outer circumferential surface of the centre ring 54 is flush with those of the side rings 56a, 56b in the initial wide drum stage. When the tyre carcass 108 is expanded and deformed into a toroidal shape, the centre plates 55 of the centre ring 54 are pressed out radially by moving the side rings 56a, 56b closer to each other, thereby bringing the centre ring 54 into the radially expanded state in which the side rings 56a, 56b are located inside the ring 54. Accordingly, the tyre carcass 108 can be formed without any accompanying stepped portion in the carcass plies 100. Thus, unlike the conventional tyre former, the tyre former of the invention is free from the undesirable event where air remains between layers of material due to the stepped portion formed in the carcass plies, which results in a defective tyre product. This obviates the need for the operation of removing the air remaining between the layers, thereby improving the working efficiency in the tyre manufacturing.

Since the centre ring 54 is formed by a plurality of separable centre plates 55 and each centre plate 55 is mounted on the corresponding slide rods 64a, 64b by way of the coupling member 60, it is very easy, for example, to replace the centre ring 54 to change the width of the tyre former for manufacturing a tyre having a different width. Specifically, the centre plates 55 are individually dismounted from the coupling members 60. The coupling members 60 are dismounted from the slide rods 64a, 64b by removing the stoppers 90 from the leading ends of the slide rods 64a, 64b. Thereafter, centre plates and coupling members suitable for a different type of tyre are mounted in an order opposite from the above. In this way, the tyre former of the invention can easily cope with manufacturing tyres having different widths. Compared with the conventional tyre former which includes a centre ring which is a single member and needs long replacement labour and time, the tyre former of the invention is capable of reducing the time and labour required for the centre ring replacement operation.

Also, it will be appreciated to provide coupling members operable for formation of different types of tyre. This will omit the replacement of coupling members, and make the width changing operation easier.

In the foregoing embodiment, each centre plate 55 is movable radially outwards along the rods 66 of the coupling members 60 inserted in the guide holes formed in the block 58 provided on the inner circumferential surface thereof and is biased toward the shaft centre by the biasing force from the contraction spring 68. The corresponding centre plate and coupling member 60 may be also slidably coupled by engaging a projection formed with the coupling member 60 and a guide hole formed in the block 58. Further, plate spring may be used instead of the contraction spring 68. Further, each centre plate 55 may be electrically biased toward the shaft centre using, for example, by an electromagnetic solenoid or the like.

Further in the foregoing embodiment, the slide rods 64a and 64b are provided inside the side rings 56a and 56b and the coupling members 60 are slidably mounted on the corresponding slide rods 64a and 64b. However, the positions and shapes of the coupling members 60 and the slide rods 64a, 64b are not limited to those described in the embodiment, but may be suitably determined depending upon the moving amount of the side rings 56a, 56b or other causes.

Furthermore in the foregoing embodiment, the slide rods 64a and 64b extend through the block 84 and 88 of each coupling member 60 to guide the coupling member 60 slidably in the axial direction of the drum shaft 52. However, the guide means for the coupling member 60 is not limited to the one described in the embodiment. For example, the coupling members 60 may be guided using a rail member instead of the slide rods 64a, 64b.

## Claims

1. A tyre former for use in a tyre building apparatus, the tyre former comprising a shaft (52), a radially expandable centre ring (54) provided coaxially around the shaft, including a plurality of centre plates (55) separable from one another in the circumferential direction of the centre ring (54) and movable in the radial direction and biasing means for biasing the plurality of centre plates (55) inwardly of the centre ring (54), a pair of side rings (56a,56b) mounted coaxially on the shaft (52), the side rings (56a,56b) being movable closer to and away from each other along the shaft to selectively provide an axially expanded state where the side rings (56a,56b) are positioned on opposite sides of the centre ring (54) and an outer circumferential surface of the side rings is flush with an outer circumferential surface of the centre ring and an axially contracted state where the side rings are positioned radially inside the centre ring, a pair of sliders slidably mounted on the shaft for supporting the pair of side rings respectively, characterised in that guide means is provided for each centre plate (55) between the pair of sliders for guiding the axial movement of the pair of slide rings (56a,56b), the guide means includes a stationary rod (86) extending in parallel with the shaft (52) and having a first block (84) and a second block (88) on opposite ends thereof, a first rod (64a) attached on one slider and extending in parallel with the shaft (52) and passing through the first block (84) for slidably supporting the first block (84), and a second rod (64b) attached on the other slider and extending in parallel with the shaft (52) and passing through the second block (88) for slidably supporting the second block (88).

2. A tyre former according to claim 1 characterised in that each centre plate (55) is formed with a slanting surface (78a, 78b) on opposite side ends thereof, the slanting surface being formed in such a way that the wall thickness of the ring segment becomes smaller at a more axially outward position, the side rings (56a, 56b) having a slanting surface (76a, 76b) on the inward side end thereof, the slanting surface being formed in such a way as to meet a slanting end surface (78a, 78b) of the centre plate (55) in the axially expanded state, whereby the side rings (56a, 56b) may be axially moved towards the inside of the centre ring along the respective slanting end surfaces.

3. A tyre former according to claim 2 characterised in that each of the side rings (56a, 56b) is further formed with a supporting portion (78a, 78b) on a more inward end than the slanting end surface for supporting the centre plates (55) in the axially expanded state.

4. A tyre former according to any of claims 1 to 3 characterised in that the side rings (56a, 56b) each are provided with a bead locking device (62a, 62b) on an axially outward end thereof.

5. A tyre former according to any of claims 1 to 4 characterised by for each centre plate (55), a stationary member fixedly attached one of the first and second blocks; and connector means provided between the stationary member and the centre plate (55) for connecting the centre plate with the stationary member.

6. A tyre former according to claim 5 characterised in that the first and second blocks (84,88) are removable from the first and second rods respectively.

7. A tyre former according to claim 5 or 6 characterised in that the connector means includes, a projection provided on a free end of the stationary member, a block fixedly attached on an inner surface of the centre plate (55), the block being formed with a hole engageable with the projection; and a spring provided between the stationary member and the block for biasing the centre plate in an inner direction.

8. A tyre former according to claim 7 characterised in that the block attached on the centre plate is removable from the stationary member.

9. A tyre former according to any of claims 1 to 8 characterised in that a removable stopper (90) is mounted at the inner end of each of the slide rods (64a,64b) for keeping the slide rod from moving away from the coupling member (60).

10. A tyre former according to any of claims 1 to 9 characterised in that the centre ring (54) comprises four centre plates (55).

## Patentansprüche

1. Reifenformgebungseinrichtung zur Verwendung in einer Reifenaufbauvorrichtung, wobei die Reifenformgebungseinrichtung umfaßt: eine Welle (52), einen radial ausdehnbaren Mittelring (54), der koaxial um die Welle herum vorgesehen ist und eine Vielzahl von Mittelplatten (55), die voneinander in der Umfangsrichtung des Mittelringes (54) trennbar und in der radialen Richtung bewegbar sind, und ein Vorspannungsmittel umfaßt, um die Vielzahl von Mittelplatten (55) nach innen von dem Mittelring (54) vorzuspannen, ein Paar Seitenringe (56a, 56b), die koaxial auf der Welle (52) angebracht sind, wobei die Seitenringe (56a, 56b) enger zueinander und voneinander weg entlang der Welle bewegbar sind, um selektiv einen axial ausgedehnten Zustand, bei dem die Seitenringe (56a, 56b) auf entgegengesetzten Seiten des Mittelringes (54) positioniert sind und eine äußere Umfangsoberfläche der Seitenringe mit einer äußeren Umfangsoberfläche des Mittelringes bündig ist, und einen axial eingezogenen Zustand vorzusehen, bei dem die Seitenringe radial innerhalb des Mittelringes positioniert sind, ein Paar Schieber, die verschiebbar an der Welle angebracht sind, um jeweils das Paar Seitenringe zu tragen, dadurch gekennzeichnet, daß das Führungsmittel für jede Mittelplatte (55) zwischen dem Paar Schieber vorgesehen ist, um die axiale Bewegung des Paares Gleitringe (56a, 56b) zu führen, wobei das Führungsmittel umfaßt: eine stationäre Stange (86), die sich parallel zur Welle (52) erstreckt und einen ersten Block (84) und einen zweiten Block (88) an ihren entgegengesetzten Enden aufweist, eine erste Stange (64a), die an dem einen Schieber angebracht ist und sich parallel zur Welle (52) erstreckt und durch den ersten Block (84) verläuft, um den ersten Block (84) verschiebbar zu tragen, und eine zweite Stange (64b), die an dem anderen Schieber angebracht ist und sich parallel zur Welle (52) erstreckt und durch den zweiten Block (88) verläuft, um den zweiten Block (88) verschiebbar zu tragen.

2. Reifenformgebungseinrichtung nach Anspruch 1, dadurch gekennzeichnet, daß jede Mittelplatte (55) mit einer Schrägfläche (78a, 78b) auf deren entgegengesetzten Seitenenden gebildet ist, wobei die Schrägfläche auf solche Weise gebildet ist, daß die Wanddicke des Ringsegments bei einer axial weiter außen liegenden Position kleiner wird, die Seitenringe (56a, 56b) eine Schrägfläche (76a, 76b) auf dem innen liegenden Seitenende aufweist, wobei die Schrägfläche auf solche Weise gebildet ist, daß sie eine schräge Endoberfläche (78a, 78b) der Mittelplatte (55) in dem axial ausgedehnten Zustand trifft, wodurch die Seitenringe (56a, 56b) axial in Richtung der Innenseite des Mittelringes entlang der jeweiligen schrägen Endoberflächen bewegt werden können.

3. Reifenformgebungseinrichtung nach Anspruch 2, dadurch gekennzeichnet, daß jeder der Seitenringe (56a, 56b) ferner mit einem Trageabschnitt (78a, 78b) auf einem weiter innen liegenden Ende als die schräge Endoberfläche ausgebildet ist, um die Mittelplatten (55) in dem axial ausgedehnten Zustand zu tragen.

4. Reifenformgebungseinrichtung nach einem der Ansprüche 1 bis 3, dadurch gekennzeichnet, daß die Seitenringe (56a, 56b) jeweils mit einer Wulstverriegelungsvorrichtung (62a, 62b) auf ihrem axial außen liegenden Ende versehen ist.

5. Reifenformgebungseinrichtung nach einem der Ansprüche 1 bis 4, dadurch gekennzeichnet, daß für jede Mittelplatte (55) ein stationäres Element fest an einem der ersten und zweiten Blöcke angebracht ist; und Verbindungsmittel zwischen dem stationären Element und der Mittelplatte (55) vorgesehen sind, um die Mittelplatte mit dem stationären Element zu verbinden.

6. Reifenformgebungseinrichtung nach Anspruch 5, dadurch gekennzeichnet, daß die ersten und zweiten Blöcke (84, 88) jeweils von den ersten bzw. zweiten Stangen entfernbar sind.

7. Reifenformgebungseinrichtung nach Anspruch 5 oder 6, dadurch gekennzeichnet, daß das Verbindungsmittel einen Vorsprung, der auf einem freien Ende des stationären Elements vorgesehen ist, einen Block, der fest an einer inneren Oberfläche der Mittelplatte (55) angebracht ist, wobei der Block mit einem Loch ausgebildet ist, das mit dem Vorsprung in Eingriff treten kann; und eine Feder umfaßt, die zwischen dem stationären Element und dem Block vorgesehen ist, um die Mittelplatte in eine innere Richtung vorzuspannen.

8. Reifenformgebungseinrichtung nach Anspruch 7, dadurch gekennzeichnet, daß der Block, der an der Mittelplatte angebracht ist, von dem stationären Element entfernbar ist.

9. Reifenformgebungseinrichtung nach einem der Ansprüche 1 bis 8, dadurch gekennzeichnet, daß ein entfernbarer Anschlag (90) an dem inneren Ende von jeder der Schubstangen (64a, 64b) befestigt ist, um die Schubstange daran zu hindern, sich von dem Kopplungselement (60) wegzubewegen.

10. Reifenformgebungseinrichtung nach einem der Ansprüche 1 bis 9, dadurch gekennzeichnet, daß der Mittelring (54) vier Mittelplatten (55) umfaßt.

## Revendications

1. Organe formateur de pneumatique destiné à être utilisé dans un appareil de confection de pneumatique, l'organe formateur de pneumatique comprenant un arbre (52), un anneau central (54) dilatable radialement et placé coaxialement autour de l'arbre et comprenant plusieurs plaques centrales (55) qui peuvent être séparées les unes des autres dans la direction circonférentielle de l'anneau central (54) et qui sont mobiles dans la direction radiale, et un dispositif de rappel des plaques centrales (55) vers l'intérieur de l'anneau central (54), une paire d'anneaux latéraux (56a, 56b) montés coaxialement sur l'arbre (52), les anneaux latéraux (56a, 56b) étant mobiles afin qu'ils se rapprochent et s'écartent le long de l'arbre pour donner sélectivement un état dilaté axialement, dans lequel les anneaux latéraux (56a, 56b) sont placés sur les côtés opposés de l'anneau central (54) et une surface circonférentielle externe des anneaux latéraux se trouve au niveau d'une surface circonférentielle externe de l'anneau central, et un état contracté axialement, dans lequel les anneaux latéraux sont placés radialement à l'intérieur de l'anneau central, une paire de coulisseaux montés afin qu'ils coulissent sur l'arbre pour le support des deux anneaux latéraux respectifs, caractérisé en ce qu'un dispositif de guidage est associé à chaque plaque centrale (55) entre les deux coulisseaux pour le guidage du déplacement axial des deux anneaux latéraux (56a, 56b), le dispositif de guidage comporte une tige fixe (86) qui est parallèle à l'arbre (52) et possède un premier bloc (84) et un second bloc (88) à ses extrémités opposées, une première tige (64a) fixée à un coulisseau s'étend parallèlement à l'arbre (52) et passe dans le premier bloc (84) afin qu'elle supporte le premier bloc (84) qui peut coulisser, et une seconde tige (64b) fixée à l'autre coulisseau est disposée parallèlement à l'arbre (52) et passe dans le second bloc (88) pour le support coulissant du second bloc (88).

2. Organe formateur de pneumatique selon la revendication 1, caractérisé en ce que chaque plaque centrale (55) est formée avec une surface inclinée (78a, 78b) ou aux extrémités latérales opposées, la surface inclinée étant formée de manière que l'épaisseur de paroi du segment d'anneau devienne plus petite à une position placée plus à l'extérieur axialement, les anneaux latéraux (56a, 56b) ayant une surface inclinée (76a, 76b) à l'extrémité du côté interne, la surface inclinée étant formée de manière qu'elle rejoigne une surface d'extrémité inclinée (78a, 78b) de la plaque centrale (55) à l'état dilaté axialement, si bien que les anneaux latéraux (56a, 56b) peuvent être déplacés axialement vers l'intérieur de l'anneau central le long des surfaces d'extrémité inclinées respectives.

3. Organe formateur de pneumatique selon la revendication 2, caractérisé en ce que chacun des anneaux latéraux (56a, 56b) est en outre formé avec une partie de support (78a, 78b) à une extrémité plus à l'intérieur que la surface d'extrémité inclinée pour le support des plaques centrales (55) à l'état axialement dilaté.

4. Organe formateur de pneumatique selon l'une quelconque des revendications 1 à 3, caractérisé en ce que les anneaux latéraux (56a, 56b) comportent chacun un dispositif de blocage de talon (62a, 62b) à son extrémité axialement externe.

5. Organe formateur de pneumatique selon l'une quelconque des revendications 1 à 4, caractérisé en ce que, pour chaque plaque centrale (55), un organe fixe est fixé à l'un des premier et second blocs, et un dispositif connecteur est placé entre l'organe fixe et la plaque centrale (55) pour le raccordement de la plaque centrale à l'organe fixe.

6. Organe formateur de pneumatique selon la revendication 5, caractérisé en ce que le premier et le second bloc (84, 88) peuvent être retirés de la première et de la seconde tige respectivement.

7. Organe formateur de pneumatique selon la revendication 5 ou 6, caractérisé en ce que le dispositif connecteur comprend une saillie placée à une extrémité libre de l'organe fixe, un bloc fixé à une surface interne de la plaque centrale (55), le bloc ayant un trou destiné à coopérer avec la saillie, et un ressort placé entre l'organe fixe et le bloc afin qu'il rappelle la plaque centrale vers l'intérieur.

8. Organe formateur de pneumatique selon la revendication 7, caractérisé en ce que le bloc fixé à la plaque centrale peut être retiré de l'organe fixe.

9. Organe formateur de pneumatique selon l'une quelconque des revendications 1 à 8, caractérisé en ce qu'un organe amovible d'arrêt (90) est monté à l'extrémité interne de chacune des tiges coulissantes (64a, 64b) afin que la tige coulissante ne puisse pas s'écarter de l'organe d'accouplement (60).

10. Organe formateur de pneumatique selon l'une quelconque des revendications 1 à 9, caractérisé en ce que l'anneau central (54) comporte quatre plaques centrales (55).
